# EUROPÄISCHE PATENTANMELDUNG

(11) **EP 4 400 358 A1**
(43) Veröffentlichungstag der Anmeldung: **17.07.2024**
(21) Anmeldenummer: 23150920.9
(22) Anmeldetag: 10.01.2023
(51) Int. Cl.: B60L 53/12, B60L 53/302

(54) **BODENSEITIGE LADEVORRICHTUNG ZUM KABELLOSEN LADEN VON ELEKTROFAHRZEUGEN**

(71) Anmelder: Siemens Aktiengesellschaft, 80333 München (DE)
(72) Erfinder: Finkenzeller, Michael, 83620 Feldkirchen-Westerham (DE); Poebl, Monika, 81667 München (DE); de Vigneux, Matthias, 80799 München (DE)
(74) Vertreter: Siemens Patent Attorneys

(57) **Zusammenfassung**

Die Erfindung gibt eine bodenseitige Ladevorrichtung (1) zum kabellosen Laden eines Elektrofahrzeugs an. Die Vorrichtung weist auf:
- eine elektrische Leiterplatte (2) mit Kapazitäten,
- eine quaderförmige Kühlplatte (3), wobei in der Kühlplatte Kühlrippen (3.1) ausgebildet sind, und
- ein Hochfrequenz-Verbindungskabel (4), das eine elektrische Verbindung zwischen der Leiterplatte (2) und einer abgesetzten Leistungselektronik (5) herstellt,

wobei ein rechteckiger erster Bereich (B1) von Kühlrippen (3.1) ausgespart ist, wobei in dem ersten Bereich die Leiterplatte (2) wärmeleitend an der Kühlplatte (3) angeordnet ist, und
wobei ein ringförmiger zweiter Bereich (B2) um den ersten Bereich herum von Kühlrippen ausgespart ist, wobei eine überschüssige Länge des Verbindungskabels (4) in dem zweiten Bereich bei Bedarf aufgewickelt lagerbar ist.

Die Erfindung gibt auch eine Ladeanordnung mit einer derartigen Ladevorrichtung (1) an.

## Beschreibung

### GEBIET DER ERFINDUNG

Die Erfindung betrifft eine Verbesserung einer bodenseitigen Ladevorrichtung (Ladepad mit Spule) zum kabellosen Laden eines Elektrofahrzeugs. Die Erfindung betrifft außerdem eine Ladeanordnung mit einer Wallbox.

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

In der heutigen Zeit spielt die Elektromobilität eine immer wichtigere Rolle. Immer mehr Menschen entscheiden sich für Elektrofahrzeuge, um umweltfreundlich unterwegs zu sein und die Abhängigkeit von fossilen Brennstoffen zu verringern. Eine Herausforderung bei der Nutzung von Elektrofahrzeugen ist jedoch die Notwendigkeit, sie regelmäßig aufzuladen. Hier setzt das Konzept für kabelloses Laden von Elektrofahrzeugen an. Durch die Anwendung dieses Konzepts können Elektrofahrzeugfahrer ihr Fahrzeug einfach und bequem aufladen, ohne dass sie sich um lästige Kabel kümmern müssen.

Zum kabellosen Laden von Elektrofahrzeugen sind im Wesentlichen drei Komponenten notwendig: eine Wallbox, ein Ladekissen / Ladepad (= charging pad) und ein Fahrzeugempfänger.

Die Wallbox beherbergt die notwendige Leistungselektronik, die die Netzversorgung in hochfrequente Energie umwandelt, die an das Ladepad abgegeben wird

Das Ladepad enthält die Primärspule zusammen mit Ferriten, Abschirmung und resonantem Anpassungsnetzwerk, das die hochfrequente Energie von der Wallbox in ein Magnetfeld umwandelt, mit dem Energie effizient an den Fahrzeugempfänger übertragen werden kann.

Der Empfänger im Fahrzeug erfasst die Energie aus dem vom Ladepad erzeugten Magnetfeld und wandelt die Energie in Gleichstrom um, um das Elektrofahrzeug anzutreiben und seine Batterie zu laden.

Derartige Anordnungen sind beispielsweise aus der KR 10 2012 0016521 A bekannt.

In dem internationalen Standard ISO/FDIS 19363 Annex B.2 wird die Bodenspulen Einheit (Ladepad, Primary Device) für die kabellose elektrische Leistungsübertragung (= wireless power transfer) kleiner 11 kW als Referenzdesign beschrieben. Zusätzlich wird ein Resonanzkreis, mit einer Spule und einer Kapazitätsanordnung (Tuning Capacitors) definiert. Die Serien- Parallelschaltung der Kapazitäten wird auf einer Leiterplatte realisiert und sollte, um keine zusätzlichen Leitungsverluste zu erzeugen, nahe der Bodenspulen platziert werden. Bei einer derartigen Ausführung ist eine thermische Anbindung an ein Gehäuse erforderlich.

Die benötigte Leistungselektronik für das Betreiben der Bodenspulen Einheit befindet sich in einem zusätzlichen Gehäuse, z.B. in der oben erwähnten Wallbox. Da die elektrische Verbindung zwischen den beiden Einheiten, Wallbox und Bodenspulen Einheit, einen hochfrequenten Wechselstrom verlustarm leiten muss, ist eine feindrähtige und Einzeladern-isolierte Hochfrequenzlitze notwendig. Die Kontaktierung einer derartigen Litze an beispielsweise einen Kabelschuh, der an einem Schraubkontakt kontaktiert werden kann, kann nur durch eine spezielle Verbindungstechnik, die nur durch unbewegliche Maschinen hergestellt werden kann, erfolgen.

Damit ist es schwierig, die notwendige Länge eines Verbindungskabels angepasst an die örtlichen Gegebenheiten, wie etwa in einer Garage notwendig wäre, zu konfektionieren. Somit muss eine Möglichkeit zur Verstauung der überschüssigen Litze vorgesehen werden.

### ZUSAMMENFASSUNG DER ERFINDUNG

Es ist Aufgabe der Erfindung, eine Lösung anzugeben, die beim kabellosen Laden von Elektrofahrzeugen eine überschüssige Länge eines Verbindungskabels, das eine bodenseitigen Ladevorrichtung mit einer Leistungselektronik verbindet, sichert.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

In einem Aspekt der Erfindung konnte aufgrund eigener thermischer Untersuchungen und Simulationen nachgewiesen werden, dass eine Aussparung für die Litze in der Mitte einer bodenseitigen Ladevorrichtung ein besonders geeigneter Ort ist, um eine Kapazitätsleiterplatte zu befestigen. Die Anforderung der Nähe zu der Übertragungsspule, als auch die notwendige Entwärmung der Leiterplatte werden erfüllt.

Da auf der Kapazitätsleiterplatte auch die Litzen des Verbindungskabels angeschlossen werden, ist in einem weiteren Aspekt dieser Bereich besonders gut geeignet, um eine Verstauung der überschüssigen Litze zu realisieren (= Kabelspeicher). Dazu muss in diesem Bereich ein passender Raum geschaffen werden. Dieser ist so gestaltet, dass unterschiedliche Längen zur Litzenaufbewahrung verfügbar sind. Das kann durch entsprechende Ausfräsungen in der Basisplatte des Kühlkörpers vorgesehen werden.

Die Erfindung beansprucht eine bodenseitige Ladevorrichtung zum kabellosen Laden eines Elektrofahrzeugs, aufweisend:
- eine elektrische Leiterplatte mit Kapazitäten,
- eine quaderförmige Kühlplatte, wobei in der Kühlplatte Kühlrippen ausgebildet sind, und
- ein Hochfrequenz-Verbindungskabel, das eine elektrische Verbindung zwischen der Leiterplatte und einer abgesetzten Leistungselektronik herstellt,

wobei ein rechteckiger erster Bereich von Kühlrippen ausgespart ist (d.h. die Kühlrippen fehlen dort), wobei in dem ersten Bereich die Leiterplatte wärmeleitend an der Kühlplatte angeordnet ist, und
wobei ein ringförmiger zweiter Bereich um den ersten Bereich herum von Kühlrippen ausgespart ist (also den ersten Bereich umschließt), wobei eine überschüssige Länge des Verbindungskabels in dem zweiten Bereich bei Bedarf aufgewickelt lagerbar ist.

Dadurch wird ein Kabelspeicher für überschüssige Kabellängen des Verbindungskabels gebildet.

In einer Weiterbildung der bodenseitigen Ladevorrichtung kann der zweite Bereich ringförmig ausgebildet sein.

In einer Weiterbildung weist die bodenseitigen Ladevorrichtung mindestens eine Nut in der Kühlplatte in dem zweiten Bereich auf, wobei die Nut ausgebildet ist, die überschüssige Länge des Verbindungskabels zumindest teilweise aufzunehmen.

In einer Weiterbildung weist die bodenseitige Ladevorrichtung Haltelemente auf, die ausgebildet sind, die überschüssige Länge des Verbindungskabels in dem zweiten Bereich lösbar zu fixieren.

In einer weiteren Ausführungsform der bodenseitigen Ladevorrichtung kann das Haltelement eine Klammer, ein Kabelbinder oder ein Kabelclips sein.

In einer weiteren Ausführungsform der bodenseitigen Ladevorrichtung kann das Verbindungskabel ein Litzenkabel sein.

In einer weiteren Ausführungsform der bodenseitigen Ladevorrichtung kann ein geradliniger dritten Bereich, der den ersten Bereich mit dem Rand der Kühlplatte verbindet, von Kühlrippen ausgespart sein, in dem ein Teil des Verbindungskabels von der Leistungselektronik zur Leiterplatte führbar ist.

In einer weiteren Ausprägung weist die bodenseitige Ladevorrichtung ein Gehäuse auf, das ausgebildet ist, die Kühlplatte, die Leiterplatte und weitere Komponenten aufzunehmen.ie

Die Erfindung beansprucht auch eine Ladeanordnung zum kabellosen Laden eines Elektrofahrzeugs, aufweisend:
- die erfindungsgemäße bodenseitige Ladevorrichtung und
- eine Wallbox, in der die Leistungselektronik angeordnet ist.

Die Erfindung bietet folgende Vorteile:
Die bodenseitige Ladevorrichtung ist durch die Einbringung der Leiterplatte (aufweisend Kapazitäten) direkt unterhalb der Spule zur Energieübertragung in den geometrischen Abmessungen kleiner und leichter, als wenn diese auf einer Aluminiumplatte daneben angeordnet wäre.

Durch die Aussparung für die Aufbewahrung des Verbindungskabels an der Unterseite der Kühlplatte kann ein zusätzlicher mechanischer Schutz des Verbindungskabels im Bereich der Kabelzuführung realisiert werden.

Die Verstauung der überschüssigen Länge innerhalb des Gehäuses ermöglicht eine werkseitige Konfektionierung des Verbindungskabels. Dadurch kann eine hochwertige Qualitätskontrolle direkt beim Hersteller erfolgen und muss nicht durch spezielles Personal oder Maschinen vor Ort erfolgen.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: eine isometrische Ansicht einer bodenseitige Spuleneinheit mit einer Litzenkabelspeichereinheit,
- FIG. 2 - 4: eine Draufsicht auf einen quaderförmigen Kühlkörper mir Kühlrippen und einem Litzenkabelspeichereinheit, und
- FIG. 5: ein Schaubild einer Anordnung zum Laden eines Elektrofahrzeugs.

### DETAILLIERTE BESCHREIBUNG DER ERFINDUNG

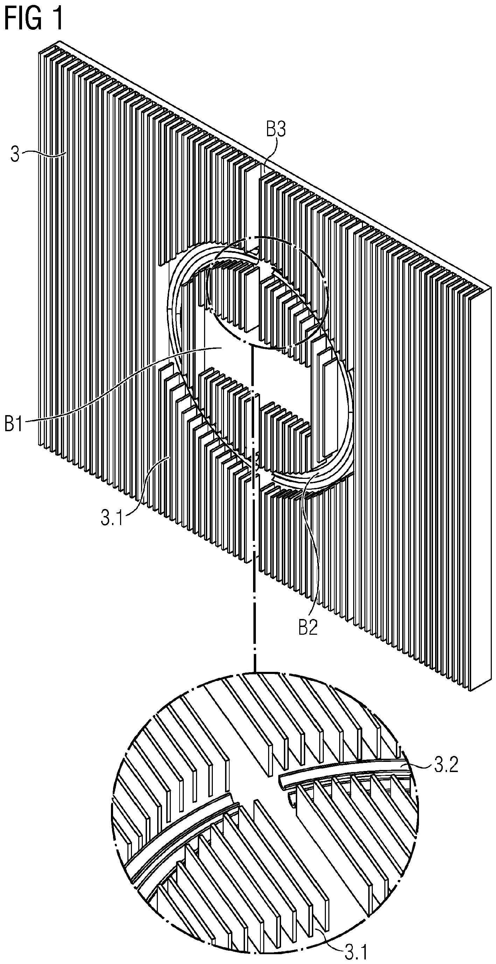

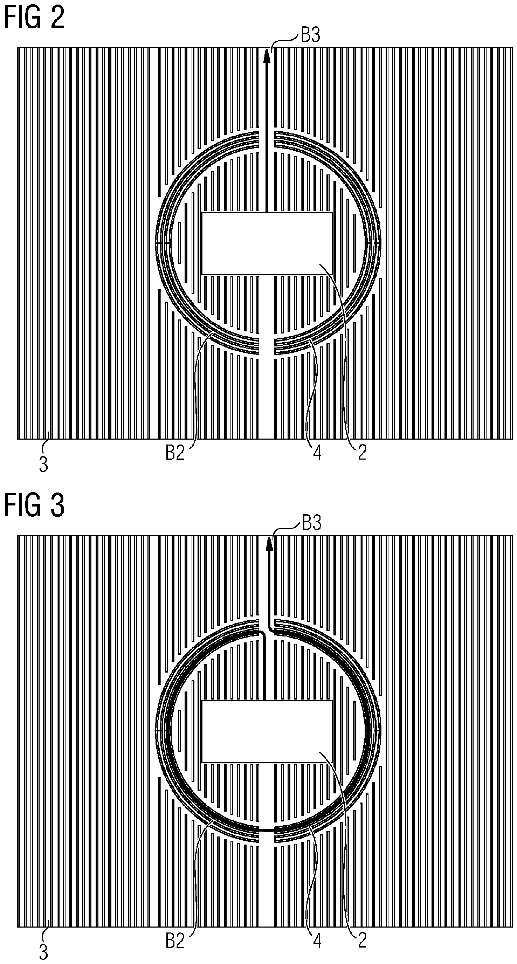

Eine konkrete Ausgestaltung der Erfindung zeigen die Zeichnungen der FIG. 1 bis FIG. 4, wobei die bodenseitige Ladevorrichtung 1 eine Kühlplatte 3 aufweist. Die Zeichnungen der FIG. 2 bis FIG. 4 zeigen unterschiedliche überschüssige Kabellängen eines Verbindungskabels 4.

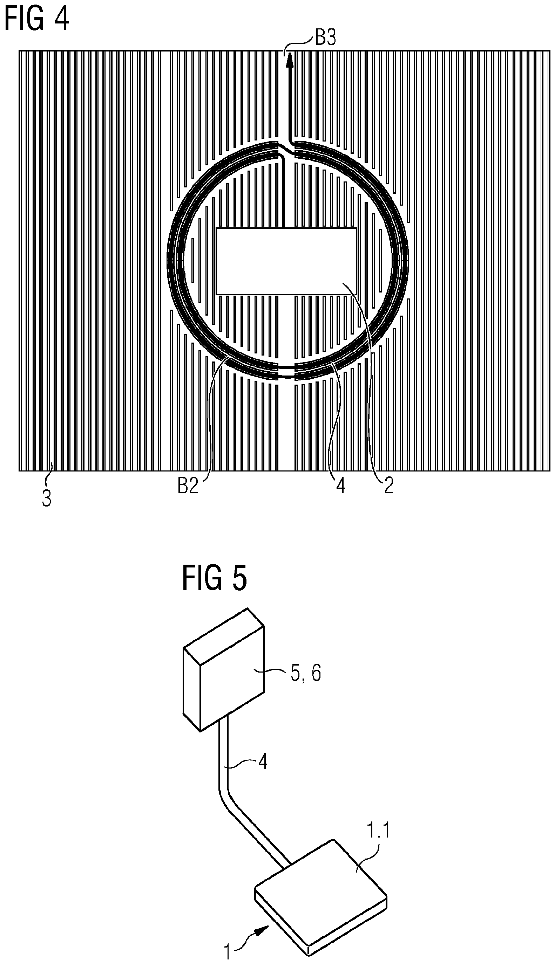

FIG. 1 zeigt eine isometrische Ansicht der Kühlplatte 3 einer bodenseitigen Ladevorrichtung 1 (siehe FIG. 5). Die Kühlplatte 3 weist Kühlrippen 3.1 auf, die in einigen Bereichen fehlen, beispielsweise ausgefräst sind; derartig in einem ersten Bereich B1, der für die Aufnahme der elektrischen Leiterplatte 2 (siehe FIG. 2 bis 4) rechteckförmig ausgebildet ist. Vom ersten Bereich B1 führt geradlinig ein dritter Bereich B3 zum Rand der Kühlplatte 3. In diesem dritten Bereich B3 kann das Verbindungskabel 4 (siehe FIG. 2 bis 4) von der Leiterplatte 2 weg an den Rand der Kühlplatte 3 geführt werden.

Um den ersten Bereich B1 ist ein zweiter, vorteilhaft ringförmiger, Bereich B2 ausgebildet, der der Aufnahme oder der Lagerung einer überschüssigen Kabellänge des Verbindungskabels 4 dient. Vorzugsweise sind in dem zweiten Bereich B2 Nuten 3.2 in der Kühlplatte 3 eingelassen, in denen das Verbindungskabel 4 zumindest teilweise abgelegt werden kann.

Die Draufsichten der Fig¨2 bis FIG. 4 zeigen unterschiedliche Kabellängen des Verbindungskabels 4, das in den Aussparungen des zweiten und des dritten Bereichs B2 und B2 abgelegt ist. Somit wird ein robuster und sicherer Speicher für überschüssige Längen des Verbindungskabels 4 gebildet. In der Mitte der Kühlplatte 3 ist die Leiterplatte 2 angeordnet. Das Verbindungskabel 4 kann mit nicht dargestellten Halteelementen in seiner Lage fixiert werden. Dazu eignen sich beispielsweise Kabelbinder, Kabelclipse oder Klammern.

FIG. 5 zeigt ein Schaubild einer Ladeanordnung zum kabellosen Laden eines Elektrofahrzeugs mit einer Ladevorrichtung 1 nach den FIG. 1 bis FIG. 4. Das Verbindungskabel 4 verbindet die Wallbox 6 aufweisend die Leistungselektronik 5 mit der bodenseitigen Ladevorrichtung 1, die ein Gehäuse 1.1 zur Aufnahme der Komponenten aufweist.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Bodenseitige Ladevorrichtung
- 1.1: Gehäuse
- 2: Leiterplatte
- 3: Kühlplatte
- 3.1: Kühlrippen
- 3.2: Nut
- 4: Verbindungskabel
- 5: Leistungselektronik
- 6: Wallbox

- B1: Erster Bereich
- B2: Zweiter Bereich
- B3: Dritter Bereich

## Patentansprüche

1. Eine bodenseitige Ladevorrichtung (1) zum kabellosen Laden eines Elektrofahrzeugs, aufweisend:
- eine elektrische Leiterplatte (2) mit Kapazitäten,
- eine quaderförmige Kühlplatte (3), wobei in der Kühlplatte Kühlrippen (3.1) ausgebildet sind, und
- ein Hochfrequenz-Verbindungskabel (4), das eine elektrische Verbindung zwischen der Leiterplatte (2) und einer abgesetzten Leistungselektronik (5) herstellt,
**dadurch gekennzeichnet,**
**dass** ein rechteckiger erster Bereich (B1) von Kühlrippen (3.1) ausgespart ist, wobei in dem ersten Bereich die Leiterplatte (2) wärmeleitend an der Kühlplatte (3) angeordnet ist, und
**dass** ein ringförmiger zweiter Bereich (B2) um den ersten Bereich herum von Kühlrippen ausgespart ist, wobei eine überschüssige Länge des Verbindungskabels (4) in dem zweiten Bereich bei Bedarf aufgewickelt lagerbar ist.

2. Die bodenseitige Ladevorrichtung nach Anspruch 1,
**dadurch gekennzeichnet,**
**dass** der zweite Bereich (B2) ringförmig ausgebildet ist.

3. Die bodenseitige Ladevorrichtung nach Anspruch 1 oder 2, **gekennzeichnet durch**:
- mindesten eine Nut (3.2) in der Kühlplatte (3) in dem zweiten Bereich (B2), wobei die Nut ausgebildet ist, die überschüssige Länge des Verbindungskabels (4) zumindest teilweise aufzunehmen.

4. Die bodenseitige Ladevorrichtung nach einem der vorhergehenden Ansprüche,
**gekennzeichnet durch**:
- Haltelemente, die ausgebildet sind, die überschüssige Länge des Verbindungskabels (4) in dem zweiten Bereich (B2) lösbar zu fixieren.

5. Die bodenseitige Ladevorrichtung nach Anspruch 4,
**dadurch gekennzeichnet,**
**dass** das Haltelement eine Klammer, ein Kabelbinder oder ein Kabelclips ist.

6. Die bodenseitige Ladevorrichtung nach einem der vorhergehenden Ansprüche,
**dadurch gekennzeichnet,**
**dass** das Verbindungskabel (4) ein Litzenkabel ist.

7. Die bodenseitige Ladevorrichtung nach einem der vorhergehenden Ansprüche,
**dadurch gekennzeichnet,**
**dass** ein geradliniger dritten Bereich (B3), der den ersten Bereich (B1) mit dem Rand der Kühlplatte (3) verbindet, von Kühlrippen (3.1) ausgespart ist, wobei in dem dritten Bereich ein Teil des Verbindungskabels (4) von der Leistungselektronik (5) zur Leiterplatte (2) führbar ist.

8. Die bodenseitige Ladevorrichtung nach einem der vorhergehenden Ansprüche,
**gekennzeichnet durch**:
- ein Gehäuse (1.1), das ausgebildet ist, die Kühlplatte (3), die Leiterplatte (2) und weitere Komponenten aufzunehmen.ie

9. Eine Ladeanordnung zum kabellosen Laden eines Elektrofahrzeugs,
**gekennzeichnet durch**:
- die bodenseitige Ladevorrichtung (1) nach einem der vorhergehenden Ansprüche und
- eine Wallbox (6), in der die Leistungselektronik (5) angeordnet ist.
